# EUROPÄISCHE PATENTSCHRIFT

(11) **EP 3 122 610 B1**
(45) Veröffentlichungstag und Bekanntmachung des Hinweises auf die Patenterteilung: **12.09.2018**
(21) Anmeldenummer: 15712830.7
(22) Anmeldetag: 16.03.2015
(51) Int. Cl.: F16C 3/03, B62D 1/16

(54) **WELLE FÜR EINE LENKUNG EINES KRAFTFAHRZEUGS**
SHAFT FOR STEERING A MOTOR VEHICLE
ARBRE SERVANT À DIRIGER UN VÉHICULE À MOTEUR

(30) Priorität: 26.03.2014 DE 102014104191
(43) Veröffentlichungstag der Anmeldung: 01.02.2017
(73) Patentinhaber: ThyssenKrupp Presta AG, 9492 Eschen (LI); thyssenkrupp AG, 45143 Essen (DE)
(72) Erfinder: JÄGER, Bernhard, 88239 Wangen im Allgäu (AT); DUROT, Janick, 9435 Heerbrugg (CH); BREUER, Marius, 6900 Lochau (AT)
(74) Vertreter: thyssenkrupp Intellectual Property GmbH
(86) Internationale Anmeldenummer: PCT/EP2015/055471
(87) Internationale Veröffentlichungsnummer: WO 2015/144483

(56) Entgegenhaltungen:
- WO-A1-2010/086269
- DE-A1- 10 352 915
- DE-A1-102004 009 188

## Beschreibung

### Technisches Gebiet

Die vorliegende Erfindung betrifft eine Welle für eine Lenkung eines Kraftfahrzeugs, welche insbesondere ein Außenrohr und ein gegenüber dem Außenrohr teleskopierbares Innenrohr aufweist.

### Stand der Technik

Teleskopierbare Lenkwellen für Kraftfahrzeuge sind bekannt, bei welchen eine innere Spindel und eine dazu komplementäre, koaxial zur inneren Spindel angeordnete äußere Spindel vorgesehen sind, welche relativ zueinander teleskopierbar sind. Auf diese Weise lässt sich bei Kraftfahrzeugen eine positionsverstellbare Lenksäule darstellen, mittels welcher die Lenkradposition zumindest in Axialrichtung der Lenkwelle an die jeweilige Fahrerposition angepasst werden kann, um entsprechend die Ergonomie für den Fahrer des Kraftfahrzeugs und damit die Fahrsicherheit zu verbessern. Teleskopierbare Lenkwellen sind weiterhin für Sicherheitslenksäulen bekannt, bei welchen die Welle im Crash-Falle zurückweicht beziehungsweise sich verkürzt, beispielsweise dadurch, dass der Fahrer auf dem Lenkrad auftrifft und das Lenkrad dann zusammen mit der Lenkwelle zurückschiebt.

Teleskopierbare Lenkwellen werden in Kraftfahrzeugen zwischen dem Lenkgetriebe und der Lenksäule eingesetzt und sollen neben der Positionseinstellung und Crashsicherheit auch geringfügige Änderungen des Abstandes zwischen dem Lenkgetriebe und der Lenksäule kompensieren, die beispielsweise aufgrund dynamischer Belastungen im Fahrbetrieb durch die entsprechenden Verwindungen des Chassis auftreten, aber auch durch Bewegungen des Lenkgetriebes in einer Gummilagerung. Auch diese geringfügigen Änderungen des Abstands sollen möglichst geräuscharm und für den Fahrer nicht spürbar durch die teleskopierbare Lenkwelle kompensiert werden.

Die Lenkwelle mit dem Teleskopmechanismus soll neben einer leichtgängigen und ruckfreien Axialverstellung auch eine möglichst symmetrische Übertragung des Lenkdrehmoments zwischen der inneren Spindel und der äußeren Spindel bereitstellen, so dass der Fahrer zum einen keinen Unterschied feststellen kann, zwischen einem Lenkausschlag in die eine Richtung und einem Lenkausschlag in die andere Richtung, und zum anderen ein mögliches Spiel bei der Übertragung des Drehmomentes zwischen der inneren Spindel und der äußeren Spindel durch den Fahrer nicht wahrgenommen wird.

Um insbesondere beim Transport der noch nicht in einem Kraftfahrzeug eingebauten aber montierten Welle und bei der eigentlichen Montage der Welle in das Kraftfahrzeug ein Auseinanderrutschen der beiden gegeneinander teleskopierbaren Teile zu verhindern, sind zur Begrenzung des Auszugs der beiden teleskopierbaren Teile gegeneinander Auszugsicherungen bekannt. Beispielsweise ist aus der DE 100 2004 009 188 A1 eine gattungsgemäße axial verstellbare Lenkspindel bekannt, bei welcher ein Innenrohr eine Außenverzahnung aufweist, welche einen Anschlag des Innenrohrs gegenüber einer in das Außenrohr eingeschraubten Hülse bereitstellt. Hierdurch wird eine Auszugsicherung beziehungsweise Auszugsbegrenzung bereitgestellt.

Aus der WO 2010/086269 A1 ist eine teleskopierbare Welle bekannt, bei welcher das Außenrohr gegenüber dem Innenrohr mit einer Abdichtung abgedichtet ist.

### Darstellung der Erfindung

Ausgehend von dem bekannten Stand der Technik ist es eine Aufgabe der vorliegenden Erfindung, eine Welle für eine Kraftfahrzeuglenkung bereitzustellen, welche einen weiter vereinfachten Aufbau bereitstellt.

Diese Aufgabe wird durch eine Welle für eine Lenkung eines Kraftfahrzeugs mit den Merkmalen des Anspruchs 1 gelöst. Vorteilhafte Weiterbildungen ergeben sich aus den Unteransprüchen. Entsprechend wird eine Welle für eine Lenkung eines Kraftfahrzeugs vorgeschlagen, umfassend ein Außenrohr und ein relativ zu dem Außenrohr teleskopierbares Innenrohr, wobei das Innenrohr zur Übertragung eines Drehmoments drehfest in dem Außenrohr geführt ist und ein innenliegendes Ende des Innenrohrs im Außenrohr aufgenommen ist, wobei an dem innenliegenden Ende des Innenrohrs eine Auszugsicherung zum Begrenzen des Auszugs des Innenrohrs aus dem Außenrohr vorgesehen ist. Erfindungsgemäß ist die Auszugssicherung in einem Innenraum des Innenrohrs vorgesehen und weist mindestens ein federndes Sperrelement zum formschlüssigen Begrenzen des Auszugs des Innenrohrs aus dem Außenrohr auf.

Dadurch, dass die Auszugsicherung mindestens ein federndes Sperrelement zum formschlüssigen Begrenzen des Auszugs des Innenrohrs aus dem Außenrohr aufweist, kann eine einfache Ausbildung einer Auszugsicherung bereitgestellt werden. Das federnde Sperrelement kann dabei so ausgebildet sein, dass ein besonders einfacher Zusammenbau der Welle erreicht wird. Dies wird dadurch erreicht, dass die Innenwelle in die Außenwelle herein geschoben wird, wobei das Sperrelement zunächst entgegen seiner Federspannung zusammengedrückt wird, und dann, nach Überfahren eines Hinterschnitts im Außenrohr, das Sperrelement aufgrund der Federspannung so expandiert, dass es fortan eine Auszugsicherung für das Innenrohr gegenüber dem Außenrohr bereitstellt. Mit anderen Worten kann ein einfacher Zusammenbau durch ein Zusammenschieben des Innenrohrs und des Außenrohrs erreicht werden, wobei dann weitere Montageschritte nicht mehr notwendig sind. Das federnde Sperrelement hintergreift dabei einen Hinterschnitt im Außenrohr derart, dass ein Widerhaken bereitgestellt wird.

Die Auszugsicherung kann damit auch nur am Innenrohr angebracht sein, so dass auf aufwändige zusätzliche Montageschritte zum Darstellen einer Auszugsicherung am Außenrohr verzichtet werden kann.

Bevorzugt ist das entlastete Sperrelement unter einem spitzen Winkel bezüglich der Achse des Innenrohrs angeordnet. Der Winkel ist dabei bevorzugt kleiner als 90°, bevorzugt kleiner als 70°, besonders bevorzugt kleiner als 45°. Durch diese Ausprägung des Sperrelementes mit einem spitzen Winkel in Richtung auf die Haupterstreckung auf das Innenrohr zu, kann ein beim Einschieben des Innenrohrs in das Außenrohr entgegen der Einschubrichtung gerichtetes Sperrelement ausgebildet werden, welches nach dem Auffedern einfach einen Widerhaken zur Begrenzung des Auszugs des Innenrohrs gegenüber dem Außenrohr ausbildet. Durch die entsprechende Winkelausprägung kann weiterhin erreicht werden, dass auch bei einer Belastung der Auszugsicherung, also wenn versucht wird, das Innenrohr gegenüber dem Außenrohr herauszuziehen, eine Kraftkomponente so auf das Sperrelement wirkt, dass es einen möglichst hohen Widerstand gegen das Herausziehen des Innenrohrs aus dem Außenrohr bereitstellt. Insbesondere findet bei einem spitzen Winkel im Wesentlichen eine Stauchbeanspruchung des Sperrelementes statt, so dass hier ein möglichst hoher Widerstand zum Begrenzen des Auszugs bereitgestellt wird. Das Sperrelement wird auf diese Weise selbstverriegelnd ausgebildet.

Bevorzugt kann das Außenrohr einen Hinterschnitt bereitstellen, an welchem sich mindestens ein Sperrelement zum Begrenzen des Auszugs des Innenrohrs gegenüber dem Außenrohr abstützen kann. Mittels des Hinterschnitts kann auf einfache Weise eine definierte Position im Außenrohr bereitgestellt werden, an welcher das Verriegeln des Innenrohrs am Außenrohr vorgegeben ist. Besonders bevorzugt weist das Außenrohr einen Bereich geringeren Durchmessers, in welchem das Innenrohr drehfest geführt ist, und einen Bereich größeren Durchmessers, in welchem das innenliegende Ende des Innenrohrs zusammen mit der Auszugsicherung aufgenommen ist, auf, wobei der Hinterschnitt am Übergang des Bereichs größeren Durchmessers zu dem Bereich geringeren Durchmessers ausgebildet ist. Besonders bevorzugt kann auch das Sperrelement beim Einschieben des Innenrohrs in das Außenrohr hinter dem Hinterschnitt des Außenrohrs in radialer Richtung auffedern, um einen Widerhaken zum Begrenzen des Auszugs des Innenrohrs gegenüber dem Außenrohr auszubilden.

Um eine möglichst reibungsarme oder sogar reibungsfreie Auszugsicherung bereit zu stellen, kann eine Mehrzahl an Sperrelementen vorgesehen sein, welche im entlasteten Zustand gemeinsam einen Außendurchmesser bereitstellen, welcher kleiner ist als der Innendurchmesser des Außenrohrs in einem Bereich des Außenrohrs mit erweitertem Durchmesser. Damit kommen die Sperrelemente im Normalbetrieb nicht in Kontakt mit dem Außenrohr. Nur, wenn die Auszugsicherung eine Begrenzung des Auszugs bereitstellen soll, stützen sich die Sperrelemente an dem Außenrohr ab und stellen damit den Widerstand gegen das Herausziehen bereit.

Um ein einfaches und schnelles Montieren der Auszugsicherung am Innenrohr zu ermöglichen, weist die Auszugsicherung bevorzugt einen zylinderförmigen Abschnitt zum Einführen in den Innenraum des Innenrohrs auf, wobei der zylinderförmige Abschnitt mindestens ein Formschlusselement aufweist, welches formschlüssig in einer Vertiefung, beispielsweise einer Nut, des Innenrohrs verriegelbar ist. Damit kann die Auszugsicherung sowohl schnell und einfach, als auch in einem dem Zusammenschieben des Innenrohrs und des Außenrohrs vorgelagerten Bearbeitungsschritt an dem Innenrohr angebracht werden.

Um ein Blockieren beim ersten Einschieben des Innenrohrs in das Außenrohr zu vermeiden, weist die Auszugsicherung bevorzugt einen zylinderförmigen Abschnitt zum Einführen in den Innenraum des Innenrohrs mit einer solchen Länge auf, dass ein Abschnitt des in das Innenrohr eingeführten zylinderförmigen Körpers so über das innenliegende Ende des Innenrohrs hinaussteht, dass alle Sperrelemente im Wesentlichen parallel zum zylinderförmigen Körper federnd an diesen angelegt werden können. Damit liegen die Sperrelemente beim Einschieben am zylinderförmigen Abschnitt an, so dass ein Blockieren des Innenrohrs beim Einschieben durch ein mögliches Verkanten oder Verklemmen der Sperrelemente vermieden werden kann.

In einer vorteilhaften Ausbildung ist mindestens ein federndes Sperrelement radial nach außen in die Sperrposition zum Begrenzen des Auszugs des Innenrohrs aus dem Außenrohr vorgespannt, so dass die Sperrposition, die dann der entspannten Position des federnden Sperrelements entspricht, sicher erreicht werden kann.

Die Auszugsicherung und insbesondere Sperrelement ist bevorzugt aus einem Kunststoff, Stahl oder Federstahl ausgebildet. Besonders bevorzugt ist jedoch Kunststoff.

Die Welle kann besonders bevorzugt entweder als Lenkwelle oder als Lenkspindel ausgebildet sein und entsprechend entweder zwischen einer Lenksäule und einem Lenkritzel, oder zwischen dem Lenkrad und der Lenkwelle anordenbar sein.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Seitenansicht einer Welle im montierten Zustand;
- Figur 2: eine schematische perspektivische Darstellung einer Welle in einer auseinandergezogenen Darstellung; und
- Figur 3: eine schematische Schnittdarstellung durch ein in einem Außenrohr aufgenommenen Innenrohr, welches eine Auszugsicherung bereitstellt.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

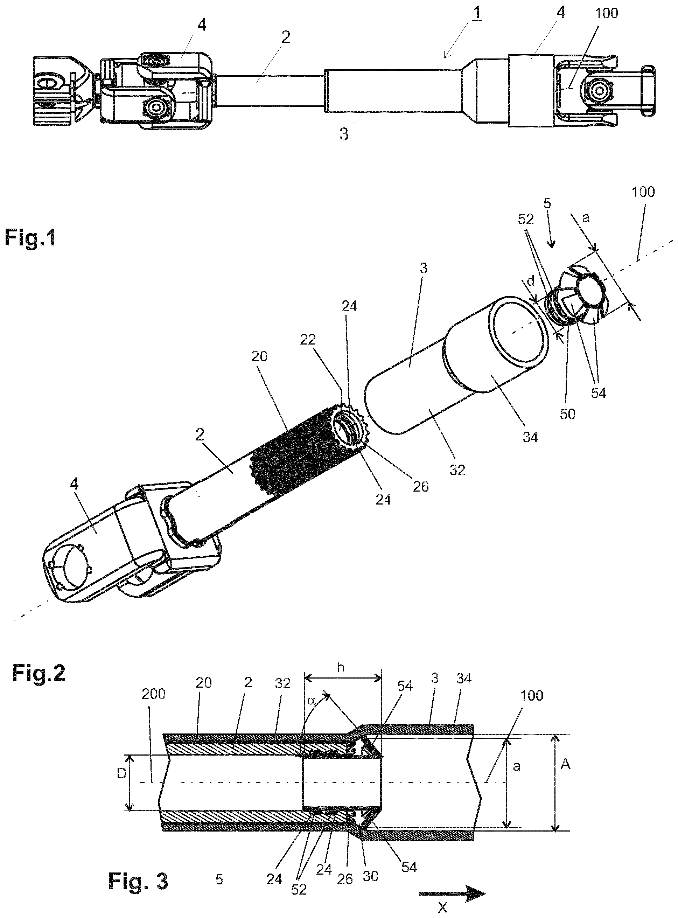

In den Figuren 1 bis 3 ist schematisch eine Welle 1 gezeigt, welche ein Innenrohr 2 und ein Außenrohr 3 aufweist. Das Innenrohr 2 ist in dem Außenrohr 3 axial teleskopierbar angeordnet, derart, dass eine Axialverschiebung des Innenrohrs 2 gegenüber dem Außenrohr 3 erfolgen kann.

Am Innenrohr 2 ist eine Gabel 4 angeordnet, welche Teil eines Kreuzgelenks ist, über welches das Innenrohr 2 abtriebsseitig mit den nachfolgenden Lenkungskomponenten verbunden ist. Am abtriebsseitigen Ende der als Lenkwelle dargestellten Welle 1 kann beispielsweise in bekannter Weise ein Lenkgetriebe oder ein Lenkritzel vorgesehen sein, über welches das eingetragene Lenkmoment dann auf eine Zahnstange und über Spurstangen auf die zu lenkenden Räder des Kraftfahrzeugs übertragen wird.

Am Außenrohr 3 ist ebenfalls eine Gabel 4 angeordnet, welche Teil eines Kreuzgelenks ist, über welches das Außenrohr 3 mit einem antriebsseitigen Ende der Welle 1 verbunden ist. Am antriebsseitigen Ende der Welle 1 kann beispielsweise ein Lenkrad über eine in einer Lenksäule geführte Lenkspindel angebunden sein, über welches ein Fahrer ein entsprechendes Lenkmoment in die Welle 1 eintragen kann.

Wie besonders gut in Figur 2 zu erkennen ist, ist das Innenrohr 2 gegenüber dem Außenrohr 3 in Richtung der Achse 100 der Welle 1 teleskopierbar. Über eine Außenverzahnung 20, welche mit einer in der Figur 2 nicht gezeigten komplementären Gegenverzahnung im Außenrohr 3 in Eingriff steht, ist das Innenrohr 2 im Außenrohr 3 drehfest geführt. Entsprechend kann ein Lenkmoment, welches über das Außenrohr 3 auf das Innenrohr 2 übertragen werden soll, mittels des auf diese Weise ausgebildeten Formschlusses im Wesentlichen spielfrei übertragen werden. Damit ist die Welle 1 zwar axial teleskopierbar, für eine Rotation um die Achse 100 der Welle 1 jedoch im Wesentlichen spielfrei.

Eine Auszugsicherung 5 ist am innenliegenden Ende 26 des Innenrohrs 2 vorgesehen, mittels welcher der Auszug des Innenrohrs 2 aus dem Außenrohr 3 begrenzt werden kann. Das innenliegende Ende 26 des Innenrohrs 2 wird im montierten Zustand der Welle 1 im Außenrohr 3 aufgenommen.

Die Auszugsicherung 5 weist eine Mehrzahl federnder Sperrelemente 54 auf, welche nach außen hin vorgespannt sind. Mit anderen Worten zeigen die Sperrelemente 54 nach außen, also von der Achse 200 des Innenrohrs 2 fort, wenn sie entlastet sind und wenn damit die durch sie ausgebildete Feder entspannt ist.

Die Sperrelemente 54 sind, wie sich aus der Schnittdarstellung der Figur 3 ergibt, in einem spitzen Winkel α zur Achse 200 des Innenrohrs 2 hin so angeordnet, dass die Enden der Sperrelemente 54 zur Haupterstreckung des Innenrohrs 2 hin zeigen.

Beim erstmaligen Montieren der Welle 1 wird das Innenrohr 2 in Einschubrichtung X in das Außenrohr 3 eingeschoben, so dass die Sperrelemente 54 zunächst nach hinten zeigend zurückfedern und dann, so wie in Figur 3 gezeigt, hinter einen Hinterschnitt 30 des Außenrohres 3 wieder so auseinander federn, dass das Innenrohr 2 gegenüber dem Außenrohr 3 entgegen der Einschubrichtung X nicht mehr über diese Position hinaus zurückgezogen werden kann. Die Sperrelemente 54 bilden entsprechend nach dem Überfahren des Hinterschnitts 30 mit der Auszugsicherung 5 beim Einschieben des Innenrohrs 2 in das Außenrohr 3 einen Widerhaken aus, welcher einem Zurückziehen des Innenrohrs 2 gegenüber dem Außenrohr 3 entgegen der Einschubrichtung X entgegenwirkt. Die Sperrelemente 54 und insbesondere deren Enden stützen sich zum Begrenzen des Auszugs des Innenrohrs 2 gegenüber dem Außenrohr 3 am Hinterschnitt 30 des Außenrohrs 3 ab.

Das Außenrohr 3 weist einen Abschnitt mit einem geringeren Durchmesser 32 auf, dessen Innendurchmesser im Wesentlichen dem Außendurchmesser des Innenrohrs 2 entspricht. In diesem Abschnitt geringeren Durchmessers 32 des Außenrohrs 3 wird das Innenrohr 2 im Wesentlichen in Rotationsrichtung spielfrei und in Axialrichtung teleskopierbar geführt. In diesem Abschnitt geringeren Durchmessers 32 ist auch die zu der Außenverzahnung 20 des Innenrohrs 2 komplementäre Innenverzahnung des Außenrohrs 3 so angeordnet, dass eine im Wesentlichen spielfreie drehfeste Verbindung zwischen dem Innenrohr 2 und dem Außenrohr 3 bereitgestellt wird.

Das Außenrohr 3 stellt weiterhin einen Abschnitt erweiterten Durchmessers 34 bereit, welcher einen Innendurchmesser A aufweist, der größer ist als der Außendurchmesser des Innenrohrs 2. Der Innendurchmesser A des Außenrohrs 3 in dem Abschnitt erweiterten Durchmessers 34 weist auch einen größeren Durchmesser auf, als der größte Durchmesser a der Auszugsicherung 5. Der größte Durchmesser a der Auszugsicherung 5 wird insbesondere durch den Durchmesser sämtlicher Sperrelemente 54 in deren entspannten, ausgefederten Sperrzustand definiert. Entsprechend kann ein Verschieben des Innenrohrs 2 gegenüber dem Außenrohr 3 durchgeführt werden, ohne dass die entspannten Sperrelemente 54 im Außenrohr 3, insbesondere in dessen Bereich erweiterten Durchmessers 34, anliegen würden. Damit tritt hier keinerlei Reibung zwischen der Auszugsicherung 5 und dem Außenrohr 3 auf, so dass die Verschiebekraft zwischen dem Innenrohr 2 und dem Außenrohr 3 durch die Auszugsicherung 5 nicht beeinflusst wird.

Die Auszugsicherung 5 wird in den Innenraum 22 des Innenrohrs 2 eingesetzt. Dazu weist die Auszugsicherung 5 einen zylinderförmigen Abschnitt 50 auf, welcher einen Außendurchmesser d aufweist, welcher im Wesentlichen dem Innendurchmesser D des Innenraums 22 des Innenrohrs 2 entspricht. Entsprechend kann der zylinderförmige Abschnitt 50 einfach in das Innenrohr 2 eingeführt werden.

Um die Auszugsicherung 5 im Innenrohr 2 zu halten, sind im gezeigten Ausführungsbeispiel auf der Außenseite des zylinderförmigen Abschnitts 50 elastische Formschlusselemente 52 vorgesehen, welche in dazu komplementäre Nuten 24, welche im Innenrohr 2 vorgesehen sind, einrasten können. Die Formschlusselemente 52 sind radial vorgespannt und federn beim Einführen des zylinderförmigen Abschnitts 50 entsprechend in die Nuten 24 ein, wenn die Auszugsicherung 5 am innenliegenden Ende 26 in das Innenrohr 2 eingeschoben wird. Entsprechend kann die Auszugsicherung 5 auf einfache Weise in das Innenrohr 2 eingerastet werden, so dass eine einfache Montage der Auszugsicherung 5 möglich wird.

Die Auszugsicherung 5 kann weiterhin bereits in einem vorherigen Prozessschritt mit dem Innenrohr 2 verbunden werden und insbesondere einfach dadurch in dieses eingeclipst werden, indem die Formschlusselemente 52 in die entsprechenden Nuten 24 am im Außenrohr 3 geführten Ende 26 des Innenrohrs 2 einrasten.

Beim Verbinden des Innenrohrs 2 mit dem Außenrohr 3 wird das Innenrohr 2 in Einschubrichtung X in das Außenrohr 3 eingeschoben, wobei die Sperrelemente 54 nach hinten, also entgegen der Einschubrichtung X, an dem Zylinderkörper 50 der Auszugsicherung 5 anliegen. Nachdem das innenliegende Ende 26 des Innenrohrs 2 beziehungsweise das vordere Ende der Auszugsicherung 5 den Bereich größeren Durchmessers 34 des Außenrohrs 3 erreicht hat und damit den Hinterschnitt 30 überfahren hat, federn die Sperrelemente 54 aufgrund deren Federspannung nach außen und bilden den Widerhaken aus. Die Sperrelemente 54 kommen dann am Hinterschnitt 30 zur Anlage, wenn das Innenrohr 2 gegenüber dem Außenrohr 3 über die durch den Hinterschnitt 30 und die Geometrie der Auszugsicherung 5 definierte Position hinweg entgegen der Einschubrichtung X herausgezogen werden soll.

Entsprechend stellt die Auszugsicherung 5 eine Sicherung gegen das unbeabsichtigte Herausziehen des Innenrohrs 2 aus dem Außenrohr 3 bereit. Gleichzeitig lässt sich aber eine besonderes einfache Montage durch einfaches Hineinschieben des Innenrohrs 2 in das Außenrohr 3 erreichen.

Der spitze Winkel α zwischen dem jeweiligen Sperrelement 54 und der Achse 200 des Innenrohrs 2 liegt in der Sperrposition, also der entspannten Position, der Sperrelemente 54 bevorzugt bei unter 90°, besonders bevorzugt unter 70° und ganz besonders bevorzugt unter 45°, derart, dass beim Aufbringen einer Auszugskraft, welche durch die Auszugsicherung 5 aufgehalten werden soll, hauptsächlich eine Stauchung auf die Sperrelemente 54 aufgebracht wird, welche den Widerhaken auch selbsthemmend ausbildet.

Die Auszugsicherung 5 kann entweder aus Kunststoff ausgebildet sein, oder aber aus Stahl oder einem Federstahl, so dass eine zuverlässige Ausbildung auch der vorgespannten Sperrelemente 54 genauso wie der vorgespannten Formschlusselemente 52 vorgesehen sein kann.

Um ein Zurückfedern der Sperrelemente 54 beim Einschieben des Innenrohrs 2 in den Bereich geringeren Durchmessers 32 des Außenrohrs 3 zu ermöglichen, ohne dass durch die Dicke der Sperrelemente 54 ein Blockieren oder Verklemmen des Innenrohrs 2 im Außenrohr 3 erfolgen kann, hat der zylinderförmige Abschnitt 50 bevorzugt eine Länge h, die so ausgebildet ist, dass ein Teil des zylinderförmigen Abschnitts 50 über das innenliegende Ende 26 des Innenrohrs 2 in Einschubrichtung X so heraussteht, dass die Sperrelemente 54 im Wesentlichen auf den zylinderförmigen Abschnitt 50 entgegen der Federspannung ausgelenkt werden können, ohne an das innenliegende Ende 26 des Innenrohres 2 anzustoßen. Mit anderen Worten steht der zylinderförmige Abschnitt 50 vor dem innenliegenden Ende 26 bevorzugt so weit vor, wie es zumindest der Länge der Sperrelemente 54 im vollständig ausgelenkten, eingefederten Zustand entspricht. Damit kann vermieden werden, dass beim Einschieben des Innenrohrs 2 in das Außenrohr 3 bei der ersten Montage der Durchmesser der Auszugsicherung 5 mit den entgegen der Einschubrichtung X an den zylinderförmigen Abschnitt 50 angenäherten Sperrelemente 54 den Innendurchmesser des Bereiches geringeren Durchmessers 32 des Außenrohrs 3 nicht überschreitet. Damit lässt sich ein hinderungsfreies Einschieben des Innenrohrs 2 ohne Verklemmen oder Blockieren in das Außenrohr 3 erreichen.

### Bezuqszeichenliste

- 1: Welle
- 2: Innenrohr
- 20: Außenverzahnung
- 22: Innenraum
- 24: Nut
- 26: innenliegendes Ende
- 3: Außenrohr
- 30: Hinterschnitt
- 32: Bereich geringeren Durchmessers
- 34: Bereich größeren Durchmessers
- 4: Gabel
- 5: Auszugsicherung
- 50: zylinderförmiger Abschnitt
- 52: Formschlusselement
- 54: Sperrelement
- 100: Achse der Welle
- 200: Achse des Innenrohrs
- X: Einschubrichtung
- α: Winkel zwischen dem Sperrelement und der Achse des Innenrohrs
- D: Innendurchmesser des Innenrohrs
- d: Außendurchmesser des zylinderförmigen Abschnitts der Auszugsicherung
- A: Innendurchmesser des Bereiches größeren Durchmessers des Außenrohres
- a: größter Durchmesser der Auszugsicherung mit ausgefederten Sperrelementen
- h: Länge des zylinderförmigen Abschnitts der Auszugsicherung

## Patentansprüche

1. Welle (1) für eine Lenkung eines Kraftfahrzeugs, umfassend ein Außenrohr (3) und ein relativ zu dem Außenrohr (3) teleskopierbares Innenrohr (2), wobei das Innenrohr (2) zur Übertragung eines Drehmoments drehfest in dem Außenrohr (3) geführt ist und ein innenliegendes Ende (26) des Innenrohrs (2) im Außenrohr (3) aufgenommen ist, wobei an dem innenliegenden Ende (26) des Innenrohrs (2) eine Auszugsicherung (5) zum Begrenzen des Auszugs des Innenrohrs (2) aus dem Außenrohr (3) vorgesehen ist,
**dadurch gekennzeichnet, dass**
die Auszugsicherung (5) in einem Innenraum (22) des Innenrohrs (2) vorgesehen ist und mindestens ein federndes Sperrelement (54) zum formschlüssigen Begrenzen des Auszugs des Innenrohrs (2) aus dem Außenrohr (3) aufweist.

2. Welle (1) gemäß Anspruch 1, **dadurch gekennzeichnet, dass** das entlastete Sperrelement (54) unter einem spitzen Winkel (a) kleiner als 90° bezüglich der Achse (200) des Innenrohrs (2) angeordnet ist.

3. Welle (1) gemäß Anspruch 1 oder 2, **dadurch gekennzeichnet, dass** das Außenrohr (3) einen Hinterschnitt (30) bereitstellt, an welchem sich mindestens ein Sperrelement (54) zum Begrenzen des Auszugs des Innenrohrs (2) gegenüber dem Außenrohr (3) abstützten kann.

4. Welle (1) gemäß Anspruch 3, **dadurch gekennzeichnet, dass** das Außenrohr (3) einen Bereich geringeren Durchmessers (32), in welchem das Innenrohr (2) drehfest geführt ist, und einen Bereich größeren Durchmessers (34), in welchem das innenliegende Ende (26) des Innenrohrs (2) zusammen mit der Auszugsicherung (5) aufgenommen ist, aufweist, wobei der Hinterschnitt (30) am Übergang des Bereichs größeren Durchmessers (34) zu dem Bereich geringeren Durchmessers (32) ausgebildet ist.

5. Welle (1) gemäß Anspruch 3 oder 4, **dadurch gekennzeichnet, dass** das Sperrelement (54) beim Einschieben des Innenrohrs (2) in das Außenrohr (3) hinter dem Hinterschnitt (30) des Außenrohrs (3) auffedern kann, um einen Widerhaken zum Begrenzen des Auszugs des Innenrohrs (2) gegenüber dem Außenrohr (3) auszubilden.

6. Welle (1) gemäß einem der vorstehenden Ansprüche, **dadurch gekennzeichnet, dass** eine Mehrzahl an Sperrelementen (54) vorgesehen ist, welche im entlasteten Zustand gemeinsam einen Außendurchmesser (a) bereitstellen, welcher kleiner ist als der Innendurchmesser (A) des Außenrohrs (3) in einem Bereich des Außenrohrs (3) mit erweitertem Durchmesser (34).

7. Welle (1) gemäß einem der vorstehenden Ansprüche, **dadurch gekennzeichnet, dass** die Auszugsicherung (5) einen zylinderförmigen Abschnitt (50) zum Einführen in den Innenraum (22) des Innenrohrs (2) aufweist, wobei der zylinderförmige Abschnitt (50) mindestens ein Formschlusselement (52) aufweist, welches formschlüssig in einer Vertiefung, beispielsweise einer Nut (24), des Innenrohrs (2) verriegelbar ist.

8. Welle (1) gemäß einem der vorstehenden Ansprüche, **dadurch gekennzeichnet, dass** die Auszugsicherung (5) einen zylinderförmigen Abschnitt (50) zum Einführen in den Innenraum (22) des Innenrohrs (2) mit einer solchen Länge (h) aufweist, dass ein Abschnitt des in das Innenrohr (2) eingeführten zylinderförmigen Körpers (50) so über das innenliegende Ende (26) des Innenrohrs (2) hinaussteht, dass alle Sperrelemente (54) im Wesentlichen parallel zum zylinderförmigen Körper (50) federnd anlegbar sind.

9. Welle (1) gemäß einem der vorstehenden Ansprüche, **dadurch gekennzeichnet, dass** mindestens ein federndes Sperrelement (54) nach außen in eine Sperrposition zum Begrenzen des Auszugs des Innenrohrs (2) aus dem Außenrohr (3) vorgespannt ist.

10. Welle (1) gemäß einem der vorstehenden Ansprüche, **dadurch gekennzeichnet, dass** sie als Lenkwelle oder Lenkspindel ausgebildet ist.

## Claims

1. Shaft (1) for a steering system of a motor vehicle, comprising an outer tube (3) and an inner tube (2) which can be telescoped relative to the outer tube (3), the inner tube (2) being guided fixedly in the outer tube (3) so as to rotate with it in order to transmit a torque, and an inner end (26) of the inner tube (2) being received in the outer tube (3), a pull-out protection means (5) for limiting the pulling of the inner tube (2) out of the outer tube (3) being provided at the inner end (26) of the inner tube (2),
**characterized in that**
the pull-out protection means (5) is provided in an interior space (22) of the inner tube (2) and has at least one sprung blocking element (54) for limiting the pulling of the inner tube (2) out of the outer tube (3) in a positively locking manner.

2. Shaft (1) according to Claim 1, **characterized in that** the relieved blocking element (54) is arranged at an acute angle (α) of less than 90° with regard to the axis (200) of the inner tube (2).

3. Shaft (1) according to Claim 1 or 2, **characterized in that** the outer tube (3) provides an undercut (30), on which at least one blocking element (54) for limiting the pulling of the inner tube (2) out of the outer tube (3) can be supported.

4. Shaft (1) according to Claim 3, **characterized in that** the outer tube (3) has a region of smaller diameter (32), in which the inner tube (2) is guided fixedly so as to rotate with it, and a region of larger diameter (34), in which the inner end (26) of the inner tube (2) is received together with the pull-out protection means (5), the undercut (30) being configured at the transition of the region of larger diameter (34) to the region of smaller diameter (32).

5. Shaft (1) according to Claim 3 or 4, **characterized in that,** when the inner tube (2) is pushed into the outer tube (3), the blocking element (54) can spring open behind the undercut (30) of the outer tube (3), in order to configure a barb for limiting the pulling of the inner tube (2) out of the outer tube (3).

6. Shaft (1) according to one of the preceding claims, **characterized in that** a plurality of blocking elements (54) are provided which, in the relieved state, together provide an external diameter (a) which is smaller than the internal diameter (A) of the outer tube (3) in a region of the outer tube (3) with a widened diameter (34).

7. Shaft (1) according to one of the preceding claims, **characterized in that** the pull-out protection means (5) has a cylindrical section (50) for introducing into the interior space (22) of the inner tube (2), the cylindrical section (50) having at least one positively locking element (52) which can be locked in a depression, for example a groove (24), of the inner tube (2) in a positively locking manner.

8. Shaft (1) according to one of the preceding claims, **characterized in that** the pull-out protection means (5) has a cylindrical section (50) for introducing into the interior space (22) of the inner tube (2) with a length (h) which is such that a section of the cylindrical body (50) which is introduced into the inner tube (2) projects beyond the inner end (26) of the inner tube (2) in such a way that all the blocking elements (54) can be applied in a sprung manner substantially parallel to the cylindrical body (50).

9. Shaft (1) according to one of the preceding claims, **characterized in that** at least one sprung blocking element (54) is prestressed outward into a blocking position in order to limit the pulling of the inner tube (2) out of the outer tube (3).

10. Shaft (1) according to one of the preceding claims, **characterized in that** it is configured as a steering shaft or a steering spindle.

## Revendications

1. Arbre (1) de direction d'un véhicule automobile, comprenant un tube extérieur (3) et un tube intérieur (2) pouvant être déplacé de manière télescopique par rapport au tube extérieur (3), le tube intérieur (2) étant guidé de manière solidaire en rotation dans le tube extérieur (3) en vue de transférer un couple et une extrémité intérieure (26) du tube intérieur (2) étant reçue dans le tube extérieur (3), une fixation anti-extraction (5) pour limiter l'extraction du tube intérieur (2) hors du tube extérieur (3) étant prévue au niveau de l'extrémité intérieure (26) du tube intérieur (2),
**caractérisé en ce que**
la fixation anti-extraction (5) est prévue dans un espace interne (22) du tube intérieur (2) et présente au moins un élément de verrouillage à ressort (54) pour limiter par engagement par correspondance de formes l'extraction du tube intérieur (2) hors du tube extérieur (3).

2. Arbre (1) selon la revendication 1, **caractérisé en ce que** l'élément de verrouillage détendu (54) est disposé suivant un angle aigu (α) inférieur à 90° par rapport à l'axe (200) du tube intérieur (2).

3. Arbre (1) selon la revendication 1 ou 2, **caractérisé en ce que** le tube extérieur (3) présente une contre-dépouille (30) au niveau de laquelle peut s'appuyer au moins un élément de verrouillage (54) pour limiter l'extraction du tube intérieur (2) par rapport au tube extérieur (3).

4. Arbre (1) selon la revendication 3, **caractérisé en ce que** le tube extérieur (3) présente une région de plus petit diamètre (32) dans laquelle est guidé le tube intérieur (2) de manière solidaire en rotation et une région de plus grand diamètre (34) dans laquelle l'extrémité intérieure (26) du tube intérieur (2) est reçue conjointement avec la fixation anti-extraction (5), la contre-dépouille (30) étant réalisée au niveau de la transition de la région de plus grand diamètre (34) à la région de plus petit diamètre (32).

5. Arbre (1) selon la revendication 3 ou 4, **caractérisé en ce que** l'élément de verrouillage (54), lors de l'enfoncement du tube intérieur (2) dans le tube extérieur (3) derrière la contre-dépouille (30) du tube extérieur (3) peut constituer un effet de ressort pour réaliser une butée afin de limiter l'extraction du tube intérieur (2) par rapport au tube extérieur (3).

6. Arbre (1) selon l'une quelconque des revendications précédentes, **caractérisé en ce qu'**une pluralité d'éléments de verrouillage (54) sont prévus, lesquels, dans l'état détendu, présentent conjointement un diamètre extérieur (a) qui est inférieur au diamètre intérieur (A) du tube extérieur (3) dans une région du tube extérieur (3) ayant un diamètre élargi (34).

7. Arbre (1) selon l'une quelconque des revendications précédentes, **caractérisé en ce que** la fixation anti-extraction (5) présente une portion cylindrique (50) pour l'introduction dans l'espace intérieur (22) du tube intérieur (2), la portion cylindrique (50) présentant au moins un élément d'engagement par correspondance de formes (52) qui peut être verrouillé par engagement par correspondance de formes dans un renfoncement, par exemple une rainure (24), du tube intérieur (2).

8. Arbre (1) selon l'une quelconque des revendications précédentes, **caractérisé en ce que** la fixation anti-extraction (5) présente une portion cylindrique (50) pour l'introduction dans l'espace intérieur (22) du tube intérieur (2) avec une longueur (h) telle qu'une portion du corps cylindrique (50) introduit dans le tube intérieur (2) dépasse au-delà de l'extrémité intérieure (26) du tube intérieur (2) dans une mesure telle que tous les éléments de verrouillage (54) puissent s'appliquer avec effet de ressort essentiellement parallèlement au corps cylindrique (50).

9. Arbre (1) selon l'une quelconque des revendications précédentes, **caractérisé en ce qu'**au moins un élément de verrouillage à ressort (54) est précontraint vers l'extérieur dans une position de verrouillage pour limiter l'extraction du tube intérieur (2) hors du tube extérieur (3).

10. Arbre (1) selon l'une quelconque des revendications précédentes, **caractérisé en ce qu'**il est réalisé sous forme d'arbre de direction ou de colonne de direction.
